(19) Europäisches Patentamt
European Patent Office
Office européen des brevets

(11) **EP 4 575 921 A1**

(12) **EUROPEAN PATENT APPLICATION**

(43) Date of publication:
**25.06.2025 Bulletin 2025/26**

(21) Application number: **24219257.3**

(22) Date of filing: **12.12.2024**

(51) International Patent Classification (IPC):
**G06N 10/20** (2022.01) **G06N 20/00** (2019.01)
**G06N 10/60** (2022.01)

(52) Cooperative Patent Classification (CPC):
**G06N 20/00; G06N 10/60;** G06N 5/01; G06N 10/20;
G06N 10/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.12.2023 IN 202321087410**

(71) Applicant: **Tata Consultancy Services Limited
Maharashtra (IN)**

(72) Inventors:
• **SIVAKUMAR, Narendran**
London, SW1X 7HS (GB)
• **VISWANATHAN, Sankaranarayanan**
600113 Chennai, Tamil Nadu (IN)
• **KANNAN, Radhika**
600113 Chennai, Tamil Nadu (IN)
• **RAMASAMY VENKADA, Subramanian**
560066 Bangalore, Karnataka (IN)

(74) Representative: **Goddar, Heinz J. et al
Boehmert & Boehmert
Anwaltspartnerschaft mbB
Pettenkoferstrasse 22
80336 München (DE)**

(54) **METHOD AND SYSTEM FOR QUANTUM COMPUTING BASED PRE-TRAINING OF ARTIFICIAL INTELLIGENCE (AI) DATA MODELS**

(57) Training of Artificial Intelligence (AI) data models requires huge amount of data to be processed, which requires a huge amount of resources to be allocated for the data processing. For the same reason, time involved in training of the AI data model also substantially increases, which is a challenge existing AI data model training approaches fail to address. Embodiments disclosed herein provide a method and system for quantum computing based pre-training of AI data models. In this quantum computing based approach, the system, by means of achieving synchronization across various quantum states and further by optimizing activation functions being used, pre-trains the AI data model in iterations, till convergence with a determined global minima is achieved.

receiving, via one or more hardware processors, an Artificial Intelligence (AI) data model and associated set of hyperparameters, as input — 202

extracting, via the one or more hardware processors, a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit — 204

determining, via the one or more hardware processors, a path for the AI data model to achieve convergence to a global minima, for each of the plurality of quantum states — 206

synchronizing the plurality of quantum states, via the one or more hardware processors, wherein by synchronizing the plurality of quantum states, change to each qubit while achieving the convergence to the global minima is reflected in each associated qubit — 208

determining, via the one or more hardware processors, an activation function from among a plurality of activation functions computed on qubits of the synchronized plurality of quantum states, as an optimal activation function for the AI data model, wherein the optimal activation function is executed to introduce non-linearity to the AI data model — 210

dynamically allocating, via the one or more hardware processors, one or more resources for pre-training of the AI data model — 212

iteratively performing, via the one or more hardware processors, the pre-training of the AI data model using the dynamically allocated one or more resources till the convergence is achieved via the determined path — 214

200 FIG. 2

**Description**

CROSS-REFERENCE TO RELATED APPLICATIONS AND PRIORITY

The present application claims priority to Indian application no. 202321087410, filed on December 20, 2023.

TECHNICAL FIELD

The disclosure herein generally relates to pre-training of AI data models, and, more particularly, to a quantum computing based pre-training of the AI data models.

BACKGROUND

Artificial Intelligence (AI) data models find applications in a variety of domains, and is a field of intense research currently. AI models is a broad term that may include Generative AI (GenAI) models such as Large Language Models (LLMs) and other similar data models. Large Language Model (LLM) is a deep learning algorithm used for performing a variety of tasks. LLMs play a pivotal role in development of Artificial Intelligence (AI) systems. Training of LLMs however requires huge amount of data to be processed, which requires a huge amount of resources to be allocated for the data processing. For the same reason, time involved in training of the LLM also substantially increases, which is a challenge existing LLM training approaches fail to address. This is the case with other AI models as well. Another disadvantage of the existing approaches is with respect to handling High-Dimensional Parameter Space. The AI data models typically have an extremely large number of parameters, making the training process complex. Another disadvantage of the existing approaches is with respect to overcoming Local Minima. Traditional training methods often get trapped in local minima, leading to suboptimal performance. Another disadvantage of the existing approaches is with respect to Real-time Synchronization of Model Updates. Any change with respect to any parameter in the model is to be reflected across all related parameters. However, existing approaches fail to do this, resulting in improper updates, and in turn adversely affecting predictions. Another disadvantage of the existing approaches is with respect to scalability for larger models. As the AI data models grow in size, scaling the training process becomes increasingly challenging. Another disadvantage of the existing approaches is with respect to energy efficiency. The energy consumption of training large-scale neural networks is a growing concern. Another disadvantage of the existing approaches is with respect to adaptability and flexibility of Models. Ensuring that the AI data models can adapt to new data and changing environments is a challenge. Another disadvantage of the existing approaches that have attempted quantum computing approach is with respect to quantum error mitigation. The quantum computing approach, when used, introduces its own set of challenges, including error rates in quantum computations.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving an Artificial Intelligence (AI) data model and associated set of hyperparameters, as input; extracting a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit; determining a path for the AI data model to achieve convergence to a global minima, for each of the plurality of quantum states; synchronizing the plurality of quantum states wherein by synchronizing the plurality of quantum states, change to each qubit while achieving the convergence to the global minima is reflected in each associated qubit; determining an activation function from among a plurality of activation functions computed on qubits of the synchronized plurality of quantum states, as an optimal activation function for the AI data model, wherein the optimal activation function is executed to introduce non-linearity to the AI data model; dynamically allocating one or more resources for pre-training of the AI data model; and iteratively performing the pre-training of the AI data model using the dynamically allocated one or more resources till the convergence is achieved via the determined path.

In another embodiment of the method, extracting the plurality of quantum states associated with the AI data model comprises of aggregating the plurality of quantum states to obtain a superposition of the plurality of quantum states, wherein the superposition of the plurality of quantum states represents a high dimensional landscape of the hyperparameters.

In another embodiment of the method, determining the path for the AI data model to achieve the convergence to the global minima comprises: calculating value of the global minima for multiple states of each of the qubits using a quantum annealing process; and generating an annealing schedule, wherein the annealing schedule checks at each of a plurality of iterations whether the AI data model has converged with the global minima.

In another embodiment of the method, the path for the AI data model to achieve the convergence with the global minima is determined using one or more variational quantum algorithms.

In another embodiment of the method, the one or more resources are dynamically allocated based on at least one of a) a quantum-supremacy criteria, b) one or more pre-defined task specific priorities, and c) a criteria based on fidelity of one or more quantum circuits used for the pre-training of the AI data model.

In another embodiment of the method, each of the plurality of activation functions is updated, comprising: building a set of quantum circuits representing each of the plurality of activation functions in a particular state of a neuron of a quantum circuit; and updating a current model weight and bias of each of the plurality of activation functions by performing one or more logical operations on the set of quantum circuits.

In another embodiment of the method, the pre-training of the AI data model till the convergence is achieved causes the AI data model to have a desired level of performance, and wherein upon achieving the desired level of performance, associated model parameters are finalized and a quantum-enhanced optimization is consolidated with a classical training generate a final pre-trained model.

In another embodiment, a quantum computing system is provided. The quantum computing system includes one or more hardware processors, a communication interface, and a memory storing a plurality of instructions. The plurality of instructions cause the one or more hardware processors to: receive an Artificial Intelligence (AI) data model and associated set of hyperparameters, as an input; extract a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit; determine a path for the AI data model to achieve convergence to a global minima, for each of the plurality of quantum states; synchronize the plurality of quantum states, wherein by synchronizing the plurality of quantum states, change to each qubit while achieving the convergence to the global minima is reflected in each associated qubit; determine an activation function from among a plurality of activation functions computed on qubits of the synchronized plurality of quantum states, as an optimal activation function for the AI data model, wherein the optimal activation function is executed to introduce non-linearity to the AI data model; dynamically allocate one or more resources for pre-training of the AI data model; and iteratively perform the pre-training of the AI data model using the dynamically allocated one or more resources till the convergence is achieved via the determined path.

In an embodiment of the quantum computing system, the one or more hardware processors are configured to extract the plurality of quantum states associated with the AI data model by aggregating the plurality of quantum states to obtain a superposition of the plurality of quantum states, wherein the superposition of the plurality of quantum states represents a high dimensional landscape of the hyperparameters.

In an embodiment of the quantum computing system, the one or more hardware processors are configured to determine the path for the AI data model to achieve the convergence to the global minima, by: calculating value of the global minima for multiple states of each of the qubits using a quantum annealing process; and generating an annealing schedule, wherein the annealing schedule checks at each of a plurality of iterations whether the AI data model has converged with the global minima.

In an embodiment of the quantum computing system, the one or more hardware processors are configured to use one or more variational quantum algorithms to determine the path for the AI data model to achieve the convergence with the global minima.

In an embodiment of the quantum computing system, the one or more hardware processors are configured to dynamically allocate the one or more resources based on at least one of a) a quantum-supremacy criteria, b) one or more pre-defined task specific priorities, and c) a criteria based on fidelity of one or more quantum circuits used for the pre-training of the AI data model.

In an embodiment of the quantum computing system, the one or more hardware processors are configured to update each of the plurality of activation functions, by: building a set of quantum circuits representing each of the plurality of activation functions in a particular state of a neuron of a quantum circuit; and updating a current model weight and bias of each of the plurality of activation functions by performing one or more logical operations on the set of quantum circuits.

In an embodiment of the quantum computing system, the pre-training of the AI data model till the convergence is achieved causes the AI data model to have a desired level of performance, and wherein upon achieving the desired level of performance, associated model parameters are finalized and a quantum -enhanced optimization is consolidated with a classical training generate a final pre-trained model.

In yet another aspect, a non-transitory computer readable medium is provided. The non-transitory computer readable medium includes a plurality of instructions, which when executed, causes one or more hardware processors to: receive an Artificial Intelligence (AI) data model and associated set of hyperparameters, as input; extract a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit; determine a path for the AI data model to achieve convergence to a global minima, for each of the plurality of quantum states; synchronize the plurality of quantum states, wherein by synchronizing the plurality of quantum states, change to each qubit while achieving the convergence to the global minima is reflected in each associated qubit; determine an activation function from among a plurality of activation functions computed on qubits of the synchronized plurality of quantum states, as an optimal activation function for the AI data model, wherein the optimal activation function is executed to introduce non-linearity to the AI data model; dynamically allocate one or more resources for pre-training of the AI data model; and iteratively perform the pre-training of the AI data model using the dynamically allocated one or more resources till the convergence is achieved via the determined path.

In an embodiment of the non-transitory computer readable medium, the one or more hardware processors are configured to extract the plurality of quantum states associated with the AI data model by aggregating the plurality of quantum states to obtain a superposition of the plurality of quantum states, wherein the superposition of the plurality of quantum states represents a high dimensional landscape of the hyperparameters.

In an embodiment of the non-transitory computer readable medium, the one or more hardware processors are configured to determine the path for the AI data model to achieve the convergence to the global minima, by: calculating value of the global minima for multiple states of each of the qubits using a quantum annealing process; and generating an annealing schedule, wherein the annealing schedule checks at each of a plurality of iterations whether the AI data model has converged with the global minima.

In an embodiment of the non-transitory computer readable medium, the one or more hardware processors are configured to use one or more variational quantum algorithms to determine the path for the AI data model to achieve the convergence with the global minima.

In an embodiment of the non-transitory computer readable medium, the one or more hardware processors are configured to dynamically allocate the one or more resources based on at least one of a) a quantum-supremacy criteria, b) one or more pre-defined task specific priorities, and c) a criteria based on fidelity of one or more quantum circuits used for the pre-training of the AI data model.

In an embodiment of the non-transitory computer readable medium, the one or more hardware processors are configured to update each of the plurality of activation functions, by: building a set of quantum circuits representing each of the plurality of activation functions in a particular state of a neuron of a quantum circuit; and updating a current model weight and bias of each of the plurality of activation functions by performing one or more logical operations on the set of quantum circuits.

In an embodiment of the non-transitory computer readable medium, the pre-training of the AI data model till the convergence is achieved causes the AI data model to have a desired level of performance, and wherein upon achieving the desired level of performance, associated model parameters are finalized and a quantum-enhanced optimization is consolidated with a classical training generate a final pre-trained model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary quantum computing system for pre-training of an Artificial Intelligence (AI) data model, according to some embodiments of the present disclosure.
FIG. 2 is a flow diagram depicting steps involved in the process of pre-training of the AI data model using the quantum computing system of FIG. 1, according to some embodiments of the present disclosure.
FIG. 3 is a flow diagram depicting steps involved in the process of determining a path for the AI data model to achieve convergence to a global minima, using the quantum computing system of FIG. 1, according to some embodiments of the present disclosure.
FIG. 4 is a flow diagram depicting steps involved in the process of updating each of a plurality of activation functions, using the quantum computing system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Artificial Intelligence (AI) data models find applications in a variety of domains, and is a field of intense research currently. AI models is a broad term that may include Generative AI (GenAI) models such as Large Language Models (LLMs) and other similar data models. Large Language Model (LLM) is a deep learning algorithm used for performing a variety of tasks. LLMs play a pivotal role in development of Artificial Intelligence (AI) systems. Training of LLMs however requires huge amount of data to be processed, which requires a huge amount of resources to be allocated for the data processing. For the same reason, time involved in training of the LLM also substantially increases, which is a challenge existing LLM training approaches fail to address. This is the case with other AI models as well. Another disadvantage of the existing approaches is with respect to handling High-Dimensional Parameter Space. The AI data models typically have an extremely large number of parameters, making the training process complex. Another disadvantage of the existing approaches is with respect to overcoming Local Minima. Traditional training methods often get trapped in local minima, leading to suboptimal performance. Another disadvantage of the existing approaches is with respect to Real-time Synchronization of Model Updates. Any change with respect to any parameter in the model is to be reflected across all related parameters. However, existing approaches fail to do this, resulting in improper updates, and in turn adversely affecting predictions. Another disadvantage of the existing approaches is with respect to scalability for larger models. As the AI data models grow in size, scaling the training process becomes increasingly challenging. Another disadvantage of the existing approaches is with respect to energy efficiency. The energy consumption of training large-scale neural networks is a growing concern. Another disadvantage of the existing approaches is with respect to adaptability and flexibility of Models. Ensuring that the AI data models can adapt to new data and changing environments is a challenge. Another disadvantage of the existing approaches that have attempted quantum computing approach is with respect to quantum error mitigation. The quantum computing approach, when used, introduces its own set of challenges, including error rates in quantum computations.

To address these challenges, embodiments disclosed herein provide a quantum computing based approach for training AI data models. The quantum computing system performs the pre-training of the AI data models by executing the following steps: Initially, an Artificial Intelligence (AI) data model and associated set of hyperparameters are received as input. Further, a plurality of quantum states associated with the AI data model are extracted from the associated set of hyperparameters, wherein each of the plurality of quantum states is a representation of a parameter space of the AI data model using a combination of a model weight, a bias, and the each set of the hyperparameters, stored in a qubit. Further, a path for the AI data model to achieve convergence to a global minima is determined for each of the plurality of quantum states. Further, the plurality of quantum states are synchronized, wherein by synchronizing the plurality of quantum states, change to each qubit while achieving the convergence to the global minima is reflected in each associated qubit. Further, an activation function from among a plurality of activation functions computed on qubits of the synchronized plurality of quantum states is determined as an optimal activation function for the AI data model, wherein the optimal activation function is executed to introduce non-linearity to the AI data model. Further, one or more resources for pre-training of the AI data model are dynamically allocated. Further, the pre-training of the AI data model is iteratively performed using the dynamically allocated one or more resources till the convergence is achieved via the determined path. In this approach, by achieving the synchronization between different quantum states, and further by optimizing the activation functions, the quantum computing system improves the speed with which the pre-training of AI data model is done. The quantum computing system addresses the challenge with respect to the handling of the High-Dimensional Parameter Space by efficiently navigating and optimizing this high-dimensional parameter space. The quantum computing system addresses the challenge with respect to overcoming Local Minima by using quantum annealing, and by leveraging quantum tunneling to overcome barriers in the optimization landscape and find the global minima more effectively. The quantum computing system addresses the challenge with respect to the real-time synchronization by facilitating real-time synchronization of updates across various components of the AI data model in real-time, thus maintaining consistency and accuracy of the model during training, especially in distributed computing environments. The quantum computing system addresses the challenge with respect to the scalability by reducing computational load through quantum computing techniques. The quantum computing system addresses the challenge with respect to the energy efficiency by leveraging inherent efficiency of quantum computing, potentially reducing the overall energy footprint of the training process. The quantum computing system addresses the challenge with respect to enhancement of the adaptability by using Variational Quantum Algorithms (VQAs) to optimize activation functions, allowing for more dynamic learning. The quantum computing system addresses the challenge with respect to the quantum error mitigation by implementing robust quantum algorithms and error mitigation techniques, ensuring reliable training outcomes.

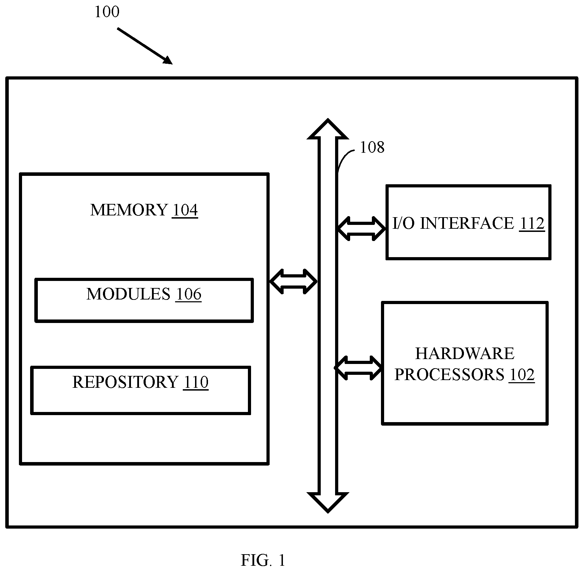

Referring now to the drawings, and more particularly to FIG. 1 through FIG. 4, where similar reference characters denote corresponding features consistently throughout the figures, there are shown preferred embodiments and these embodiments are described in the context of the following exemplary system and/or method.

FIG. 1 illustrates an exemplary quantum computing system for pre-training of Artificial Intelligence (AI) data model, according to some embodiments of the present disclosure. In an embodiment, terms 'quantum computing system' and 'system' are interchangeably used throughout. In the foregoing description, the pre-training being carried out by the system 100 is explained with reference to a Large Language Model (LLM), however, it is to be noted that the description is not intended to limit scope of embodiments disclosed herein to LLM alone, rather, the disclosed training process can be extended to any other AI model. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104. In an embodiment, the one or more hardware processors 102 are Quantum Processing Units (QPUs). In another embodiment, the one or more hardware processors 102 may be a combination of classical processors and the QPUs, with required data processing requirements divided between the classical processors and the QPUs as maybe required. In an alternate embodiment of the system of FIG. 1, the system 100 may include a classical computing system and a quantum computing system communicating each other via appropriate interface(s), to divide the data processing requirements of the system 100 for the pre-training of the AI data model (i.e., LLM).

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of quantum computing based pre-training of the AI data model. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the process of quantum computing based pre-training of the AI data model.

The data repository (or repository) 110 may include a plurality of abstracted piece of code for refinement and data that is processed, received, or generated as a result of the execution of the plurality of modules in the module(s) 106.

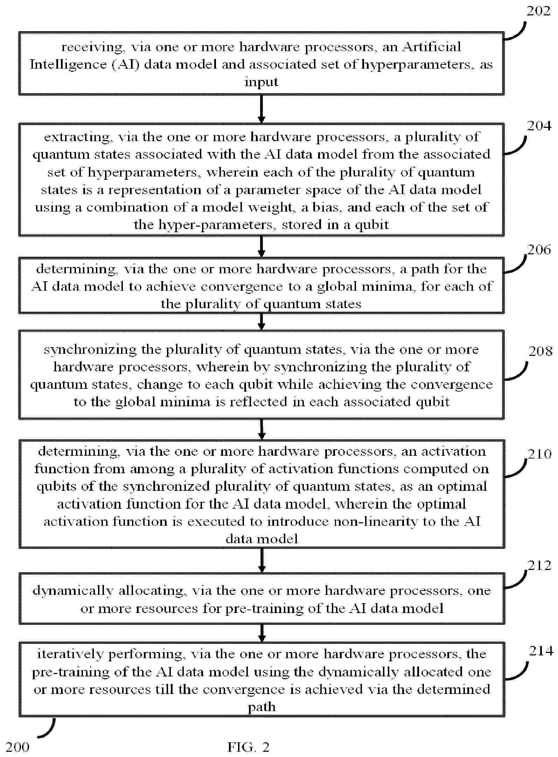

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2 through FIG. 4.

FIG. 2 is a flow diagram depicting steps involved in the process of pre-training of an Artificial Intelligence (AI) data model using the quantum computing system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagrams as depicted in FIG. 2 through FIG. 4. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical.

Further, some steps may be performed simultaneously.

At step 202 of method 200 in FIG. 2, the system 100 receives the Artificial Intelligence (AI) data model and associated set of hyperparameters, as input. For explanation purpose, it is considered that the received AI data model is a Large Language Model (LLM). The LLM received as input is the LLM that is to be pre-trained. The system 100 may pre-process the input data to condition the data for further processing. The pre-processing may involve steps such as but not limited to data format standardization, and outlier removal.

Further, at step 204 of the method 200, the system 100 extracts a plurality of quantum states associated with the LLM from the associated set of hyperparameters. Each of the plurality of quantum states is a representation of a parameter space of the LLM using a combination of a model weight, a bias, and the hyperparameter. The system 100 uses qubits to store the model weight, the bias, and the hyperparameter, which in turn represents parameter space of the LLM. Various steps involved in the process of extracting the plurality of quantum states are explained below:

Step 1: Encoding of Neural Network Parameters:

In this step, the system 100 encodes the hyperparameters of the LLM, such as weights and biases, into the quantum states. This is done using a technique called quantum encoding or quantum state preparation. The system 100 may select one of the quantum encoding or quantum state preparation approaches based on nature of the parameters and the architecture of the quantum system. Some example of the quantum state preparation approaches is amplitude encoding, where the parameters are encoded into the amplitudes of the quantum state, and qubit encoding, where parameters are represented by the states of qubits.

Step 2: Quantum Circuit Preparation:

Once the encoding scheme is selected, the system 100 prepares a quantum circuit to create desired quantum states. This quantum circuit consists of a series of quantum gates designed to manipulate the initial state of the qubits (usually starting in a standard state like all zeros) into the state representing a corresponding neural network's parameters in the quantum circuit.

Step 3: State Initialization:

In this step, the quantum system is initialized into a base state, often a ground state, from which the quantum circuit begins its operations. State initialization is a critical step to ensure accuracy in the subsequent quantum computations.

Step 4: Quantum State Manipulation:

At this step, the prepared quantum circuit is applied to the initialized qubits. Through a series of quantum gate operations (like Hadamard, Pauli, and controlled gates), the qubits are brought into a superposition and entanglement that corresponds to the encoded neural network parameters.

Step 5: Observation and Measurement:

After the quantum circuit is applied, a resultant quantum state is observed and measured by the system 100 at this state. Quantum measurements collapse the superposed and entangled qubits into classical states, from which information about the neural network parameters can be extracted.

Step 6: State Readout and Interpretation:

At this step, the system 100 read out and interprets results of the quantum measurements, in the context of the neural network. This step translates the quantum state information back into a classical form that can be used for updating or optimizing the neural network parameters.

Step 7: Feedback Loop for Optimization:

In an optimization context, the system 100 uses the extracted quantum state information to calculate updates to the neural network parameters. This forms a feedback loop where the quantum system influences the classical neural network training process, potentially including adjustments to the quantum state preparation in subsequent iterations.

Step 8: Quantum Error Correction and Mitigation:

Given the susceptibility of quantum states to errors and decoherence, the system 100 may also implement quantum error correction and mitigation techniques to ensure the fidelity and accuracy of the quantum states.

In summary, the extraction of quantum states by the system 100 involves encoding neural network parameters into quantum states, manipulating these states via a quantum circuit, and then measuring and interpreting the outcomes to influence the training and optimization of the LLM. This process leverages the unique capabilities of quantum computing to enhance the performance and efficiency of neural network training.

In an embodiment, the system 100 uses a quantum coherence technique to obtain superposition of the parameter states, and thus by embodying these parameters within the quantum states, a high-dimensional and interconnected representation of the LLM in quantum space is obtained. The quantum coherence approach used by the system 100 is detailed below.

The quantum coherence is used to maintain the superposition of quantum states. The system 100 applies the quantum coherence technique to preserve and manipulate model states of the LLM throughout the pre-training, i.e. the quantum coherence allows the LLM to maintain the superposition of different parameter states (i.e., the weights, biases, and hyperparameters) throughout the optimization process. The use of coherence ensures that these quantum states are reliably transitioned and updated, reflecting a stochastic gradient descent and any other optimization method that maybe employed in the training process. The system 100 manages the qubits coherently, allowing the system 100 to find optimal configurations for the LLM.

Use of the quantum coherence technique allows the system 100 to control phase relationships among the superposed parameter to avoid decoherence, which is a phenomenon resulting in the quantum systems losing their quantum behaviour and causing to behave more classically. Maintaining coherence allows exploitation of quantum parallelism, where multiple parameter states are processed simultaneously, which helps in increasing the speed and efficiency of optimization.

Quantum parallelism significantly enhances the speed and efficiency of optimization processes, especially in the context of optimizing Large Language Models (LLMs). Maintaining quantum coherence is crucial for exploiting the Quantum parallelism. The following aspects are executed as part of Maintaining quantum coherence for ensuring the quantum parallelism.

Quantum Superposition and Parallelism:

In a coherent quantum system, qubits can exist in a state of superposition, where they simultaneously represent multiple values. This superposition is the foundation of quantum parallelism, allowing the system 100 to process a multitude of parameter states concurrently. For instance, a single qubit in superposition can represent both 0 and 1 at the same time, and two qubits can represent all four possible combinations (00, 01, 10, 11) simultaneously.

Phase Relationships in Superposition:

Quantum coherence ensures that the phase relationships among the superposed states are preserved. This phase information is crucial for meaningful quantum computations. In the superposition state, each combination of parameter states has a specific phase, and maintaining coherence ensures that these phases remain consistent throughout the computational process.

Exploiting Entanglement for Enhanced Parallelism:

Quantum Entanglement, or alternately referred to as entanglement, plays a role in enhancing quantum parallelism. When qubits are entangled, the state of one qubit is directly related to the state of another, irrespective of their physical distance. This entanglement is used to create a complex superposition of a large number of states, representing an exponentially larger space of parameter combinations than classical bits can.

By maintaining coherence and thus ensuring reliable quantum parallelism, a quantum system can efficiently explore a vast solution space. For LLM optimization, this means evaluating a wide range of parameter configurations simultaneously to quickly identify optimal or near-optimal solutions. The quantum parallelism, enabled by the quantum coherence, allows exploration of states in reduced number of steps, significantly speeding up the optimization process. Quantum interference, another aspect reliant on quantum coherence, is used to amplify the probabilities of desirable outcomes (optimal solutions) while diminishing others. This process further accelerates finding the optimal solution in a complex optimization problem like LLM training. LLMs involve high-dimensional optimization landscapes. Quantum parallelism, underpinned by the quantum coherence, enables simultaneous processing across these dimensions, making the task more tractable and efficient compared to classical methods.

In a binary parameter representation, each state is represented as a qubit in a superposition, as:

$$|\psi_i\rangle = \alpha_i|0\rangle + \beta_i|1\rangle \qquad \text{--- (1)}$$

where $\alpha_i$ and $\beta_i$ are complex amplitudes, and $|\psi_i\rangle$ represents the state of $i^{th}$ parameter. For a continuous parameter space, the qubits are entangled to represent a quantum register that encodes a real value.

By using the quantum coherence, the system 100 preserves a relative phase information between the parameter states in the superposition state. The quantum coherence allows the system 100 in maintaining the superposed states through quantum gates that manipulate parameters without collapsing the state. This is maintained by applying unitary operations that are error-resistant and designed to counteract environmental interactions that might cause decoherence. In mathematical terms, if $\rho$ is the density matrix representing the system 100, the coherence is represented as:

$$C(\rho) = \sum_{i \neq j}|\rho_{ij}|, \rho \qquad \text{---- (2)}$$

where, $\rho$ represents a density matrix of a quantum system, and $\rho_{ij}$ refers to elements of the density matrix. This sum quantifies the degree of coherence in the system; a higher value indicates more coherence, meaning stronger quantum behaviour such as superposition and entanglement, which are critical for the effective functioning of quantum computing systems. The density matrix is a mathematical representation used to describe statistical state of the quantum computing system. The density matrix describes both pure states and mixed states, which is a statistical mixture of different quantum states. The matrix elements ($\rho_{ij}$) are complex numbers that contain information about the probabilities and phase relationships between different parameter states in the quantum system. Diagonal elements $\rho_{ii}$ represent the probabilities of the system being in a particular state, while off-diagonal elements $\rho_{ij}$ (where $i \neq j$) represent the coherence between different parameter states.

The system 100 may use any suitable optimization algorithm in the coherence stage. For example, a quantum analogue to the classical gradient descent algorithm (otherwise known as 'Quantum Gradient Descent (QGD)') maybe used, in which gates are parameterized by LLM's parameters as:

$$U(\theta) = U_n(\theta_n) \cdots U_1(\theta_1), \qquad \text{--- (3)}$$

with each $U_i(\theta_i)$ being a quantum gate dependent on parameter $\theta_i$. A cost function $E(\theta)$ could represent the difference between the output of the LLM and the expected result. The gradient is calculated using a parameter shift rule, and the parameters are updated in the direction of the negative gradient to minimize the cost function. The parameters of the PQC are iteratively updated using the gradient information until the cost function converges. This process exploits quantum parallelism and entanglement, accelerating the pre-training of LLMs.

Maintaining quantum coherence in the context of LLM optimization involves a combination of precise quantum state control, error correction, environmental isolation, and adaptive feedback steps. Goal at this stage is to maintain coherence, which is a crucial aspect of quantum computing, to avoid decoherence, which can lead to information loss. Step by step explanation of sequence in maintaining the quantum coherence is given below:

Step 1: Quantum State Initialization:

This step is crucial for setting up the initial phase relationships among the qubits that represent the parameters of the LLM. The qubits are initialized in the ground state or a known superposition state where the phase relationships are well-defined.

Step 2: Controlled Quantum Gate Operations:

To maintain coherence during the computation, quantum gates are applied in a controlled manner. The quantum gates manipulate the qubits' states, including their phase, without destroying the superposition. Gates such as Pauli-X, Y, Z, Hadamard, and phase shift gates are used to adjust the phase relationships precisely.

Step 3: Quantum Error Correction and Decoherence Avoidance:

Appropriate quantum error correction techniques are employed to detect and correct errors that can lead to decoherence. These techniques involve additional qubits (ancilla qubits) and complex circuits to monitor and maintain the integrity of the quantum state.

Step 4: Entanglement Management:

Entanglement is a resource in quantum computing but needs to be managed to maintain coherence. Entangled states are used to keep consistent phase relationships across different parts of the quantum system. Controlled operations, like CNOT gates, help in creating and managing entanglement without leading to decoherence.

Step 5: Environmental Isolation:

Quantum systems are highly sensitive to external disturbances. Part of maintaining coherence involves isolating the quantum system from its environment to maximum extent possible. The system 100 achieves the environmental isolation by means of physical cooling to near absolute zero temperatures, shielding from electromagnetic interference, and using materials with low noise properties.

Step 6: Adiabatic Processes and Slow Evolutions:

In some implementations, adiabatic processes that involve slow evolution of the quantum system are used. At this step, the system 100 keeps the quantum system in its ground state, thereby maintaining coherence throughout the computational process.

Step 7: Feedback and Adaptive Control

The system 100 monitors quantum coherence in real-time to collect related feedback, and then applies adaptive control techniques to adjust the quantum operations based on the feedback. This helps in fine-tuning the phase relationships and maintaining coherence throughout the computation.

In systems like quantum dots or trapped ions, sequences of coherent pulses are used to manipulate the quantum states. These pulse sequences are designed to control the phase evolution of the qubits accurately.

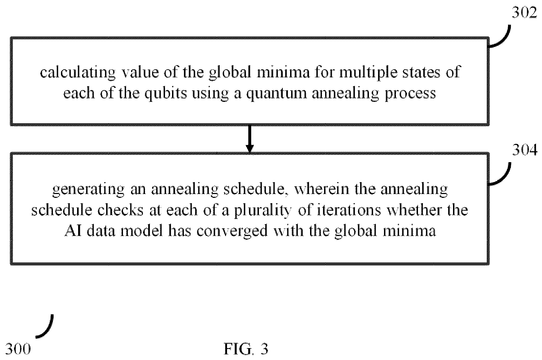

Further, at step 206 of the method 200, the system 100 determines a path for the LLM to achieve convergence to a global minima, for each of the plurality of quantum states. Various steps involved in the process of determining the path for the LLM to achieve convergence to the global minima are depicted in method 300 in FIG. 3, and are explained hereafter. At step 302 of the method 300, the system 100 uses a quantum annealing technique to determine the global minima and in turn to determine the path to convergence. Using the quantum annealing technique, the system 100 finds the global minima of a given objective function over a given set of candidate solutions. Various steps involved in the process of finding the global minima are explained below:

The quantum annealing leverages quantum mechanics principles such as quantum tunneling and superposition, to explore complex energy landscapes more efficiently than classical methods. Steps involved in the process of determining the global minima using the quantum annealing approach are given below:

Step 1: Energy Landscape Mapping:

First step in quantum annealing is to map the optimization problem onto an energy landscape, where each point in the landscape represents a possible solution (a candidate solution), and its elevation represents the cost or energy (the value of the objective function for that solution).

Step 2: Quantum Superposition and Initialization:

At this step, the quantum system (typically a set of qubits) is initialized in a superposition state, where it represents all possible solutions simultaneously. This is in contrast to classical systems, which can only represent one solution at a time.

Step 3: Quantum Tunneling:

The system 100 uses the quantum tunneling approach to pass through energy barriers directly, exploring the energy landscape more efficiently.

Step 4: Gradual Transition to Ground State:

At this step, the quantum system is slowly transitioned from a high-energy excited state towards its lowest energy state, or ground state, by means of quantum annealing approach. During this transition, the quantum system probabilistically collapses towards the state that represents the global minima of the objective function.

Step 5: Measurement and Solution:

Once the quantum system reaches the ground state, the system 100 takes a measurement. The state of the qubits at this point represents the solution that corresponds to the global minima of the objective function.
The quantum annealing facilitates dynamic adjustment of residual states by exploiting quantum tunnelling effects to escape local minima and discover the optimal state adjustments needed for model correction. This process is mathematically modelled through a time-dependent Hamiltonian that guides the evolution of the state of the quantum system towards a desired optimization. Various steps in the process of the quantum annealing are explained below:
Using the quantum annealing technique, the system 100 finds the global minima of a given objective function over a given set of candidate solutions. The quantum annealing facilitates dynamic adjustment of residual states by exploiting quantum tunnelling effects to escape local minima and discover the optimal state adjustments needed for model correction. This process is mathematically modelled through a time-dependent Hamiltonian that guides the evolution of the state of the quantum system towards a desired optimization.

1. Initialization:

The initialization step is commenced by defining a Hamiltonian, Hint, that represents an initial energy landscape corresponding to one or more residual errors in the LLM. This landscape comprises various configurations where each configuration corresponds to a potential solution for the residual errors with a specific energy level. Further, the quantum system is initialized in a ground state of Hint, which is a superposed state that encompasses the entire spectrum of potential error corrections within the LLM's parameter space. Some examples of the various configurations in the landscape are:

a. Configuration 1 - Basic Language Structures: This configuration represents a state of the LLM where it has a basic understanding of language structures such as grammar and syntax. The energy associated with this configuration reflects the LLM's proficiency in fundamental language constructs.
b. Configuration 2 - Advanced Linguistic Features: Another state pertains to the LLM's grasp of more complex linguistic features like idiomatic expressions, metaphors, or nuanced grammar. The energy level here indicates how well these advanced elements are encoded in the LLM's parameters.
c. Configuration 3 - Contextual Understanding: This configuration corresponds to the LLM's ability to understand context in language, such as differentiating between homonyms based on sentence structure. The energy level is indicative of the LLM's contextual comprehension capabilities.
d. Configuration 4 - Semantic Analysis: Represents the LLM's proficiency in semantic analysis, understanding meanings beyond literal words. The energy level shows the depth of semantic understanding encoded in the initial parameters.
e. Initialization in Ground State: The quantum system is initialized in the ground state which is a superposed state encompassing the entire spectrum of these potential initial parameter configurations. This state represents the starting point of the quantum annealing process for LLM pre-training, where the system explores various configurations to find the most effective initial parameter setting. In this superposed ground state, the system collectively represents all these different parameter settings and their respective effectiveness. The objective of the quantum annealing process is then to evolve this system towards a state that corresponds to the optimal set of initial parameters for the LLM, effectively minimizing the energy level which correlates with maximizing the efficiency and accuracy of the LLM during its pre-training phase.

2. Annealing Schedule Design:

As depicted in step 304 of the method 300, in this step, the system 100 constructs an annealing schedule that governs an adiabatic transition of the Hamiltonian from Hint to a final Hamiltonian $H_{final}$, over time. The annealing schedule encodes the objective of minimizing the LLM's residual errors. This evolution is adiabatically managed to maintain the system 100 in it's ground state, thereby ensuring that the system 100 gravitates towards the global minima energy state, which corresponds to an optimal parameter adjustment. An example of the quantum annealing schedule for LLM pre-training is given below:

Initialization of Quantum State:

- Time = 0: The quantum system begins in a high-energy superposed state. This state encodes a wide array of possible parameter configurations for the LLM, facilitating the exploration of diverse solutions.

Broad Exploration Phase:

- Time = 1 to 50 units: During this phase, the quantum system explores various parameter configurations extensively. The energy of the quantum system is gradually reduced, leveraging quantum mechanics principles like superposition and tunneling, enabling the system to bypass potential local minima in the LLM's parameter space.

Transition to Focused Exploration:

- Time = 51 to 100 units: As the system progresses, the focus shifts from broad exploration to more targeted refinement of promising parameter configurations. The annealing rate is adjusted to balance between exploration and the beginning of convergence towards effective solutions.

Parameter Refinement and Convergence:

- Time = 101 to 150 units: Entering a critical fine-tuning phase, the quantum system's energy reduction is slowed down. This slower rate allows the system to make precise adjustments, honing in on the most suitable parameter settings for the LLM.

Final Convergence to Optimum:

- Time = 151 to 200 units: The quantum system approaches its ground state, indicative of reaching the optimal parameter configuration. The annealing rate is minimized to ensure the accurate identification of the global minima.

Reaching Optimal Parameter Configuration:

- Time = 200 units: The quantum system attains its ground state, which corresponds to the optimal set of parameters for the LLM's pre-training.

Quantum Measurement and LLM Update:

- Upon completing the annealing schedule, the quantum system's state is measured, collapsing to a specific state that reflects the optimized parameters. These parameters are then applied to the LLM, significantly enhancing its pre-training process in terms of language understanding and generation abilities.

Outcome:

Through this quantum annealing schedule, the system 100 optimally navigates the LLM's parameter space, efficiently converging to the best possible settings for pre-training. This results in a significantly improved LLM, ready for advanced tasks in natural language processing with enhanced speed and efficiency in its pre-training phase.

3. Adiabatic Quantum Evolution:

At this stage, the system 100 evolves under a time-dependent Schrödinger equation, where quantum tunnelling enables it to traverse potential energy barriers, enhancing the exploration of the energy landscape. The quantum superposition enables the simultaneous appraisal of numerous potential corrections, increasing the efficiency and effectiveness of the search within the LLM's parameter space.

4. Metaheuristic Integration:

The metaheuristic integration stage entails a strategic overlay that guides the quantum annealing process, which determines the progression of the annealing schedule, and an acceptance criteria for new configurations based on comparative energy evaluations. This strategy is iterative and adaptive, enabling dynamic adjustment to the annealing process in response to the convergence rate and quality of the solution space exploration. This in turn refines the quantum annealing process iteratively and dynamically, allowing for real-time adjustments based on the progression towards an optimal set of LLM parameters. The metaheuristic integration stage plays a crucial role in guiding the quantum annealing process towards efficient convergence. This stage involves two key components: a) determining progression of the annealing schedule, and b) establishing an acceptance criteria for new configurations. This is further explained below:

Step 1: Determining progression of the annealing schedule:

a. The annealing schedule's progression is crucial for convergence efficiency. In quantum annealing, this involves transitioning the quantum system from a high-energy state, where it explores various configurations, to its lowest energy state, which represents the optimal configuration. The metaheuristic overlay strategically dictates how quickly or slowly the quantum system should transition between these states. For instance, it might initially allow for rapid transitions to enable broad exploration and then slow down the transitions to focus on fine-tuning and convergence. This strategic control is essential to avoid premature convergence to suboptimal solutions and ensure that the global minima is reached effectively.

Step 2: Acceptance Criteria for New Configurations:
b. The acceptance criteria in the metaheuristic integration stage are rules or heuristics that determine whether a newly explored configuration should be accepted or rejected. This decision is typically based on comparative energy evaluations. In the context of LLM pre-training, a new configuration might be accepted if it results in a lower energy state compared to the current state, indicating a better set of parameters (lower loss function value or improved model performance). However, to avoid getting trapped in local minima, the criteria might sometimes accept configurations with higher energy under certain conditions. This approach, akin to techniques like simulated annealing, allows the system 100 to explore more of the solution space and increases the chances of finding the global minima. The acceptance criteria can also involve probabilistic rules. For example, configurations that result in a slightly higher energy level might be accepted with a certain probability. This introduces a level of stochasticity, further aiding in the exploration of the solution space and avoiding local minima.

Convergence in this quantum annealing process is the achievement of the lowest possible energy state that the system can attain, representing the optimal parameter configuration for the LLM. The metaheuristic integration ensures that convergence is not only reached efficiently but also results in a truly optimal or near-optimal solution, significantly enhancing the pre-training process of the LLM.

5. Quantum Measurement and Parameter Update:

Upon completion of the annealing schedule, a quantum measurement is performed to collapse the quantum state to a definitive configuration corresponding to an optimized solution for the residual errors. The definitive configuration represents the optimized set of parameters for the LLM. The LLM parameters are updated to reflect the new configuration, thereby applying the calculated residual corrections to the LLM.

6. Iterative Refinement:

The steps 1-5 are repeated, with each iteration refining the LLM parameters. This iterative cycle continues until the LLM's performance criteria are met, or a loss function indicates satisfactory minimization of residual errors.
The quantum annealing approach leverages a quantum-mechanical phenomena of superposition and tunnelling through the metaheuristic approach to explore and optimize the parameter space of LLMs.
Further, at step 208 of the method 200, the system 100 synchronizes the plurality of quantum states. By synchronizing the plurality of quantum states, change to each qubit while achieving the convergence to the global minima is reflected in each associated qubit. In an embodiment, the system 100 uses a quantum entanglement approach to obtain the synchronization between the plurality of quantum states, i.e., between the qubits storing the parameter values associated with each of the plurality of quantum states.
Through entangled qubits, a change in one qubit's state instantaneously reflects in it's entangled partner, regardless of physical distance. This property ensures uniformity and coherence in the application of residual corrections. Various steps involved in the process of quantum entanglement approach for the synchronization between the quantum states are explained below.

1. Entangled State Preparation:

In this step, the system 100 initializes pairs of qubits in an entangled state, such as Bell state, where the state of one qubit instantaneously influences the state of it's entangled counterpart, regardless of the physical distance between them. The system 100 then distributes these entangled qubit pairs across a computational architecture corresponding to the LLM's parameters that require synchronized updating.

2. Parameter Encoding:

At this step, the system 100 encodes the LLM's residual states onto the entangled qubits using quantum gates. This encoding transforms the entangled state to represent the values of the parameters to be updated.

3. Quantum Correlation Exploitation:

At this step, the system 100 utilizes inherent correlations of the entangled states to reflect a change in one qubit immediately in it's entangled partner. This way, the system 100 synchronizes updates across the qubits, and in turn across the LLM, i.e., an update performed on one qubit of an entangled pair is mirrored in the other, achieving real-time synchronization.

4. Real-time Update Mechanism:

At this step, the system 100 implements a quantum circuit that applies all necessary updates to the entangled qubits. Due to the entanglement, the updates occur simultaneously across all qubit pairs, enabling the instantaneous application of corrections across the LLM's parameter space.

5. Measurement and Finalization:

At this step, the system 100 performs a measurement on the entangled qubits post-update, which collapses the quantum state to a definitive value, thus finalizing the synchronized parameter update. This measurement transfers the updated values to the LLM's parameters, ensuring that the model's state is consistent and synchronized across its entire architecture.

The real-time Synchronization via the quantum entanglement process being used by the system 100 utilizes quantum mechanical phenomena to address and solve synchronization challenges inherent in the training of LLMs.

Further, at step 210 of the method 200, the system 100 determines an activation function from among a plurality of activation functions computed on qubits of the synchronized plurality of quantum states, as an optimal activation function for the LLM. The optimal activation function is executed to introduce non-linearity to the LLM. The system 100 is configured to optimize the non-linear activation functions within the LLM during the pre-training. This is further explained below.

The system 100 uses quantum circuits that are designed to execute the non-linear activation functions, for functioning of neural networks in the LLMs. By encoding the input values of neurons into the states of qubits, the quantum circuits, using principle of superposition, enable parallel evaluation of activation functions across multiple neurons simultaneously.

At this step, to determine the global minima, the system 100 uses one or more variational quantum algorithms (VQAs) which adaptively selects and applies most effective activation functions. The VQAs use a hybrid quantum-classical approach to optimize a parameterized quantum circuit. During the pre-training of LLMs, the VQAs iteratively adjust the parameters of the quantum circuits in response to the model's performance, resulting in learning which activation functions yield optimal results for a current data and task.

A sample pseudocode that outlines the use of a Variational Quantum Algorithm (VQA) to optimize the activation functions within the LLM is given below.

```
# Pseudocode for optimizing activation functions in an LLM using a VQA

# Define the Parameterized Quantum Circuit (PQC) for the activation function
def QuantumActivationCircuit(qubit_params, input_data):
 # Quantum circuit initialization
 qubits = QuantumRegister(num_qubits)
 circuit = QuantumCircuit(qubits)

 # Encode input data onto the quantum circuit
 circuit += EncodeData(input_data)

 # Apply variational gates parameterized by 'qubit_params'
```

```
for i, param in enumerate(qubit_params):
circuit += VariationalGate(qubits[i], param)

# Return the quantum circuit which is now a superposition of states
representing the activation
 return circuit

# Define the cost function for the encoder-decoder LLM
def CostFunction(qubit_params, classical_params, input data, true_output):
 # Use the PQC to get the quantum activation output
 quantum_circuit = QuantumActivationCircuit(qubit_params, input data)
 activation_output = ExecuteCircuit(quantum_circuit)
 # Run the LLM forward pass using classical parameters and quantum
activation output
 predicted_output = LLMForwardPass(classical_params, activation_output)

 # Calculate the cost based on the difference between predicted and true
outputs (e.g., cross-entropy)
 cost = LossFunction(predicted_output, true_output)
 return cost

# VQA optimization loop
def VariationalQuantumAlgorithm(training_data):
 # Initialize quantum parameters for the PQC and classical parameters for the
LLM
 qubit_params = InitializeQuantumParams()
 classical_params = InitializeClassicalParams()

 # Classical optimizer setup (e.g., gradient descent, Adam optimizer)
 optimizer = ClassicalOptimizer()

 # Optimization iterations
 for iteration in range(max_iterations):
 # Calculate the gradient of the cost function with respect to quantum and
classical parameters
 qubit_grads, classical_grads = ComputeGradients(CostFunction,
qubit_params, classical_params, training_data)

 # Update the parameters using the optimizer
 qubit_params, classical_params = optimizer.Update(qubit_params,
classical_grads, classical_params, classical_grads)

 # Calculate and display the cost for monitoring
 current_cost = CostFunction(qubit_params, classical_params, training_data,
true_output)
 print(f'Iteration {iteration}: Cost = {current cost}")

 # Check for convergence (optional)
 if ConvergenceReached(current_cost):
 break
 # Return the optimized quantum and classical parameters
 return qubit_params, classical_params

# Example usage of the VQA within the LLM pre-training phase
optimized_qubit_params, optimized_classical_params =
VariationalQuantumAlgorithm(training_dataset)

# Integrate the optimized parameters into the LLM's activation functions for
further training or inference
```

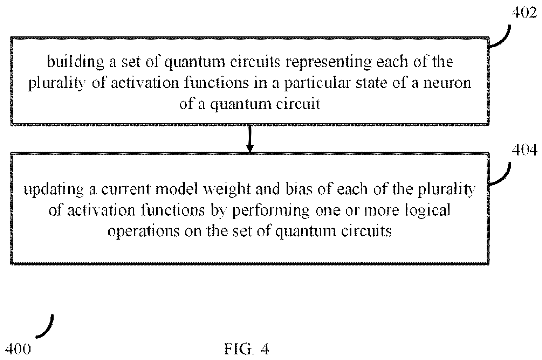

Various steps in updating the activation functions are depicted in method 400 in FIG. 4, and are explained hereafter. At step 402 of the method 400, the system 100 builds a set of quantum circuits representing each of the plurality of activation functions in a particular state of a neuron of a quantum circuit. Further, at step 404 of the method 400, the system 100 updates a current model weight and bias of each of the plurality of activation functions by performing one or more logical operations on the set of quantum circuits.

The adaptive learning of activation functions via VQAs offers a dynamic and responsive approach to model optimization. By continuously refining the choice of activation functions throughout the pre-training process, the system 100 ensures that the LLM evolves in a manner that is closely tailored to the nuances of the data it encounters.

Further, at step 212 of the method 200, the system 100 dynamically allocates one or more resources for pre-training of the LLM, using a scheduling mechanism.

a. Quantum Supremacy-Based Resource Allocation:

While using the principle of quantum supremacy, the system 100 allocates computational tasks to quantum processors to leverage their superior processing power for tasks that are intractable for classical computers. In this process, a scheduler of the system 100 evaluates the complexity of each pre-training task, identifies tasks that would benefit most from quantum computation (for e.g., tasks involving large-scale optimization or complex pattern recognition), and then assigns these tasks preferentially to the one or more hardware processors 102.

b. Dynamic Task Scheduling and Resource Management:

In this case, the system 100 dynamically schedules a plurality of pre-training tasks based on a priority system that takes into account the current state of the quantum system, nature of the tasks, and an estimated quantum advantage. Resources such as qubits, quantum gates, and quantum memory are allocated in real-time, to minimize idle times and in turn optimize throughput. This is done by incorporating an understanding of the temporal requirements of quantum operations, adjusting schedules to ensure that tasks are completed within the coherence time of the quantum hardware, thus reducing the likelihood of error due to decoherence.

c. Adaptive Scheduling with Quantum Circuit Fidelity:

In this approach, scheduling decisions are adapted based on the fidelity of quantum circuits, which is a measure of the accuracy with which quantum operations are performed. The system 100 monitors the fidelity across various quantum operations and reallocates resources to maintain high overall system performance. This adaptive approach ensures that the most critical tasks for LLM pre-training, such as those requiring high precision, are allocated to the quantum processors with the highest fidelity at any given moment.

Further, at step 214 of the method 200, the system 100 iteratively performs the pre-training of the LLM using the dynamically allocated one or more resources till the convergence is achieved via the determined path.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of pre-training of LLM. The embodiment, thus provides a quantum based approach of training LLMs. Moreover, the embodiments herein further provide an approach in which.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:

   receiving (202), via one or more hardware processors, an Artificial Intelligence (AI) data model and associated set of hyperparameters, as input;

   extracting (204), via the one or more hardware processors, a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit;

   determining (206), via the one or more hardware processors, a path for the AI data model to achieve convergence to a global minima, for each of the plurality of quantum states;

   synchronizing the plurality of quantum states (208), via the one or more hardware processors, wherein by synchronizing the plurality of quantum states, change to each qubit while achieving the convergence to the global minima is reflected in each associated qubit;

   determining (210), via the one or more hardware processors, an activation function from among a plurality of activation functions computed on qubits of the synchronized plurality of quantum states, as an optimal activation function for the AI data model, wherein the optimal activation function is executed to introduce non-linearity to the AI data model;

   dynamically allocating (212), via the one or more hardware processors, one or more resources for pre-training of the AI data model; and

   iteratively performing (214), via the one or more hardware processors, the pre-training of the AI data model using the dynamically allocated one or more resources till the convergence is achieved via the determined path.

2. The method as claimed in claim 1, wherein extracting the plurality of quantum states associated with the AI data model comprises of aggregating the plurality of quantum states to obtain a superposition of the plurality of quantum states, wherein the superposition of the plurality of quantum states represents a high dimensional landscape of the hyperparameters.

3. The method as claimed in claim 1, wherein determining the path for the AI data model to achieve the convergence to the global minima comprises:

   calculating (302) value of the global minima for multiple states of each of the qubits using a quantum annealing process; and

   generating (304) an annealing schedule, wherein the annealing schedule checks at each of a plurality of iterations whether the AI data model has converged with the global minima.

4. The method as claimed in claim 1, wherein the path for the AI data model to achieve the convergence with the global minima is determined using one or more variational quantum algorithms.

5. The method as claimed in claim 1, wherein the one or more resources are dynamically allocated based on at least one of a) a quantum-supremacy criteria, b) one or more pre-defined task specific priorities, and c) a criteria based on fidelity of one or more quantum circuits used for the pre-training of the AI data model.

6. The method as claimed in claim 1, wherein each of the plurality of activation functions is updated, wherein updating each of the plurality of activation functions comprising:

building (402) a set of quantum circuits representing each of the plurality of activation functions in a particular state of a neuron of a quantum circuit; and
updating (404) a current model weight and bias of each of the plurality of activation functions by performing one or more logical operations on the set of quantum circuits.

7. The method as claimed in claim 1, wherein the pre-training of the AI data model till the convergence is achieved causes the AI data model to have a desired level of performance, and wherein upon achieving the desired level of performance, associated model parameters are finalized and a quantum-enhanced optimization is consolidated with a classical training generate a final pre-trained model.

8. A quantum computing system (100), comprising:

one or more hardware processors (102);
a communication interface (112); and
a memory (104) storing a plurality of instructions, wherein the plurality of instructions cause the one or more hardware processors to:

receive an Artificial Intelligence (AI) data model and associated set of hyperparameters, as input;
extract a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit;
determine a path for the AI data model to achieve convergence to a global minima, for each of the plurality of quantum states;
synchronize the plurality of quantum states, wherein by synchronizing the plurality of quantum states, change to each qubit while achieving the convergence to the global minima is reflected in each associated qubit;
determine an activation function from among a plurality of activation functions computed on qubits of the synchronized plurality of quantum states, as an optimal activation function for the AI data model, wherein the optimal activation function is executed to introduce non-linearity to the AI data model;
dynamically allocate one or more resources for pre-training of the AI data model; and
iteratively perform the pre-training of the AI data model using the dynamically allocated one or more resources till the convergence is achieved via the determined path.

9. The quantum computing system as claimed in claim 8, wherein the one or more hardware processors are configured to extract the plurality of quantum states associated with the AI data model by aggregating the plurality of quantum states to obtain a superposition of the plurality of quantum states, wherein the superposition of the plurality of quantum states represents a high dimensional landscape of the hyperparameters.

10. The quantum computing system as claimed in claim 8, wherein the one or more hardware processors are configured to determine the path for the AI data model to achieve the convergence to the global minima, by:

calculating value of the global minima for multiple states of each of the qubits using a quantum annealing process; and
generating an annealing schedule, wherein the annealing schedule checks at each of a plurality of iterations whether the AI data model has converged with the global minima.

11. The quantum computing system as claimed in claim 8, wherein the one or more hardware processors are configured to use one or more variational quantum algorithms to determine the path for the AI data model to achieve the convergence with the global minima.

12. The quantum computing system as claimed in claim 8, wherein the one or more hardware processors are configured to dynamically allocate the one or more resources based on at least one of a) a quantum-supremacy criteria, b) one or more pre-defined task specific priorities, and c) a criteria based on fidelity of one or more quantum circuits used for the pre-training of the AI data model.

13. The quantum computing system as claimed in claim 8, wherein the one or more hardware processors are configured to update each of the plurality of activation functions, by:

building a set of quantum circuits representing each of the plurality of activation functions in a particular state of a neuron of a quantum circuit; and
updating a current model weight and bias of each of the plurality of activation functions by performing one or more logical operations on the set of quantum circuits.

14. The quantum computing system as claimed in claim 8, wherein the pre-training of the AI data model till the convergence is achieved causes the AI data model to have a desired level of performance, and wherein upon achieving the desired level of performance, associated model parameters are finalized and a quantum-enhanced optimization is consolidated with a classical training generate a final pre-trained model.

15. One or more non-transitory machine-readable information storage mediums comprising one or more instructions which when executed by one or more hardware processors cause:

receiving an Artificial Intelligence (AI) data model and associated set of hyperparameters, as input;
extracting a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit;
determining a path for the AI data model to achieve convergence to a global minima, for each of the plurality of quantum states;
synchronizing the plurality of quantum states, wherein by synchronizing the plurality of quantum states, change to each qubit while achieving the convergence to the global minima is reflected in each associated qubit;
determining an activation function from among a plurality of activation functions computed on qubits of the synchronized plurality of quantum states, as an optimal activation function for the AI data model, wherein the optimal activation function is executed to introduce non-linearity to the AI data model;
dynamically allocating one or more resources for pre-training of the AI data model; and
iteratively performing the pre-training of the AI data model using the dynamically allocated one or more resources till the convergence is achieved via the determined path.

100

108

MEMORY 104

MODULES 106

REPOSITORY 110

I/O INTERFACE 112

HARDWARE PROCESSORS 102

FIG. 1

202

receiving, via one or more hardware processors, an Artificial Intelligence (AI) data model and associated set of hyperparameters, as input

204

extracting, via the one or more hardware processors, a plurality of quantum states associated with the AI data model from the associated set of hyperparameters, wherein each of the plurality of quantum states is a representation of a parameter space of the AI data model using a combination of a model weight, a bias, and each of the set of the hyperparameters, stored in a qubit

206

determining, via the one or more hardware processors, a path for the AI data model to achieve convergence to a global minima, for each of the plurality of quantum states

208

synchronizing the plurality of quantum states, via the one or more hardware processors, wherein by synchronizing the plurality of quantum states, change to each qubit while achieving the convergence to the global minima is reflected in each associated qubit

210

determining, via the one or more hardware processors, an activation function from among a plurality of activation functions computed on qubits of the synchronized plurality of quantum states, as an optimal activation function for the AI data model, wherein the optimal activation function is executed to introduce non-linearity to the AI data model

212

dynamically allocating, via the one or more hardware processors, one or more resources for pre-training of the AI data model

214

iteratively performing, via the one or more hardware processors, the pre-training of the AI data model using the dynamically allocated one or more resources till the convergence is achieved via the determined path

200                                    FIG. 2

calculating value of the global minima for multiple states of each of the qubits using a quantum annealing process

302

generating an annealing schedule, wherein the annealing schedule checks at each of a plurality of iterations whether the AI data model has converged with the global minima

304

300

FIG. 3

402

building a set of quantum circuits representing each of the plurality of activation functions in a particular state of a neuron of a quantum circuit

404

updating a current model weight and bias of each of the plurality of activation functions by performing one or more logical operations on the set of quantum circuits

400

FIG. 4

Europäisches
Patentamt

European
Patent Office

Office européen
des brevets

## EUROPEAN SEARCH REPORT

**Application Number**

EP 24 21 9257

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEFANO MANGINI: "Variational quantum algorithms for machine learning: theory and applications", ARXIV.ORG, CORNELL UNIVERSITY LIBRARY, 201 OLIN LIBRARY CORNELL UNIVERSITY ITHACA, NY 14853, 16 June 2023 (2023-06-16), XP091539650, * Sections 4-5 * * Sections 2.1.6, 3.2.2.2 * | 1-15 | INV. G06N10/20 G06N20/00 G06N10/60 |
| X | WO 2023/219177 A1 (MITSUBISHI ELECTRIC CORP [JP]) 16 November 2023 (2023-11-16) * paragraph [0006] - paragraph [0011] * * paragraph [0031] - paragraph [0034] * * figures 5b, 6 * | 1-15 | |
| A | NAPAT NGOENRIANG ET AL: "Optimal Stochastic Resource Allocation for Distributed Quantum Computing", ARXIV.ORG, CORNELL UNIVERSITY LIBRARY, 201 OLIN LIBRARY CORNELL UNIVERSITY ITHACA, NY 14853, 16 September 2022 (2022-09-16), XP091335055, * abstract * | 5,12 | **TECHNICAL FIELDS SEARCHED (IPC)** G06N |

The present search report has been drawn up for all claims

| Place of search | Date of completion of the search | Examiner |
|---|---|---|
| The Hague | 9 April 2025 | Bohn, Patrice |

## ANNEX TO THE EUROPEAN SEARCH REPORT
## ON EUROPEAN PATENT APPLICATION NO.

EP 24 21 9257

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| WO 2023219177 A1 | 16-11-2023 | EP | 4388459 A1 | 26-06-2024 |
| | | JP | 2025505468 A | 26-02-2025 |
| | | WO | 2023219177 A1 | 16-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321087410